# EUROPÄISCHE PATENTSCHRIFT

(11) **EP 2 794 360 B1**
(45) Veröffentlichungstag und Bekanntmachung des Hinweises auf die Patenterteilung: **21.08.2019**
(21) Anmeldenummer: 12809244.2
(22) Anmeldetag: 17.12.2012
(51) Int. Cl.: B60R 21/017

(54) **VERFAHREN UND VORRICHTUNG ZUM BETREIBEN EINER AUSLÖSEVORRICHTUNG FÜR INSASSENSCHUTZMITTEL**
METHOD AND DEVICE FOR OPERATING A TRIGGERING DEVICE FOR PASSENGER PROTECTION MEANS
PROCÉDÉ ET DISPOSITIF D'EXPLOITATION D'UN DISPOSITIF DE DÉCLENCHEMENT POUR MOYEN DE PROTECTION D'OCCUPANT

(30) Priorität: 20.12.2011 DE 102011089147
(43) Veröffentlichungstag der Anmeldung: 29.10.2014
(73) Patentinhaber: Robert Bosch GmbH, 70442 Stuttgart (DE)
(72) Erfinder: BALZ, Stefan, 74354 Besigheim (DE)
(86) Internationale Anmeldenummer: PCT/EP2012/075793
(87) Internationale Veröffentlichungsnummer: WO 2013/092490

(56) Entgegenhaltungen:
- EP-B1- 0 997 349
- WO-A1-00/30902
- DE-A1- 19 819 124
- DE-A1- 19 837 167
- DE-A1-102004 037 543
- DE-A1-102005 030 769
- DE-A1-102005 054 126
- DE-A1-102007 046 488

## Beschreibung

Die vorliegende Erfindung betrifft ein Verfahren zum Betreiben einer Auslösevorrichtung für Insassenschutzmittel und eine Vorrichtung zum Auslösen von Insassenschutzmitteln und ein Steuergerät.

### Stand der Technik

Aus dem Stand der Technik sind schon etliche Verfahren zum Betreiben einer Auslösevorrichtung für Insassenschutzmittel, wobei zum Auslösen mindestens zwei Schalter, sogenannte Endstufen, aktiviert werden, um mindestens ein Auslösemittel mit einer Spannungsversorgung zu verbinden, bekannt.

Im Regelfall handelt es sich bei Auslösevorrichtungen für Insassenschutzmittel um elektrische bzw. elektronische Bauteile. Des Weiteren kommen Auslösevorrichtungen immer dann zum Tragen, wenn hohe physikalische Kräfte auf ein Fahrzeug einwirken, beispielsweise im Falle einer Kollision. Dabei kann es aus verschiedensten Gründen dazu kommen, dass sich ein Kurzschluss im Zündstromkreis bildet.

In heutigen Auslösevorrichtung für Insassenschutzmittel werden die Endstufen auch bei erkannten Kurzschlüssen in den Zündstromkreisen im Auslösefall immer aktiviert. Die Chance auf die Aktivierung der Rückhaltemittel wird dadurch erhöht. Die Endstufen müssen allerdings auf eine Belastung durch die Kurzschlussströme ausgelegt sein.

Aus der WO 00/30902 A1 ist ein Verfahren zum Zünden eines Insassenschutzmittels bekannt, bei dem einem zugeordneten Zündelement Energie zugeführt wird. Die Energiezufuhr wird durch eine Steuerschaltung unterbrochen, wenn eine einen Grenzwert übersteigende Spannung an einem Schaltmittel des Zündkreises festgestellt wird.

Aus der DE 10 2005 054126 A1 ist eine Vorrichtung zur Ansteuerung einer elektromagnetischen Aktuatorik und ein Verfahren zum Überwachen einer Zündschaltung einer elektromagnetischen Aktuatorik auf einen Kurzschluss gegen eine Batteriespannung und ein Verfahren zur Überwachung einer Zündschaltung einer elektromagnetischen Aktuatorik auf einen Kurzschluss gegen Masse bekannt.

Aus der EP 0 997 349 B1 ist eine Vorrichtung zum Auslösen eines Insassenschutzmittels eines Kraftfahrzeugs bekannt, das aufweist
- einen Energiespeicher, ein Zündelement für das Insassenschutzmittel und ein elektrisch steuerbares Schaltmittel zum Übertragen von Energie aus einem Energiespeicher auf das Zündelement bei Betätigung des Schaltmittels,
- eine Steuerschaltung zum Steuern des Schaltmittels,
- einen elektromechanischen Beschleunigungsschalter, durch den beim Auftreten einer ausreichenden Beschleunigung der Zündstromweg freigegeben wird, wobei der elektromechanische Beschleunigungsschalter geeignet ist, den Zündstromweg zu unterbrechen und dass eine Stromflussmesseinheit vorgesehen ist, durch die der im Zündkreis fließende Strom gemessen wird, wobei das Schaltmittel abhängig vom gemessenen Strom derart gesteuert wird, dass das Zündelement für eine vorgegebene Mindestdauer mit Zündstrom beaufschlagt wird.

Im Unterschied zu pyrotechnischen Aktuatoren (Gurtstraffer, Airbags), die nach der Aktivierung hochohmig werden, muss bei induktiven Aktuatoren (Magnetschalter für Fußgängerschutz, Überrollbügel oder ähnlichem) davon ausgegangen werden, dass im Zündkreis auch nach Auslösung weiter Strom fließt. Dadurch ergibt sich eine höhere Belastung der Auslösevorrichtungen.

### Kern und Vorteile der Erfindung

Kern der vorliegenden Erfindung ist es, ein Verfahren bzw. eine Vorrichtung bzw. ein Steuergerät vorzustellen, das bzw. die bzw. das derart gestaltet ist, dass ein Auslösen der Insassenschutzmittel auch im Falle eines elektrischen Kurzschlusses zu einer Versorgungsspannung möglich ist. Erfindungsgemäß wird dies durch die Merkmale der unabhängigen Ansprüche gelöst. Vorteilhafte Weiterbildungen und Ausgestaltungen ergeben sich aus den Unteransprüchen.

Das erfindungsgemäße Verfahren zum Betreiben einer Auslösevorrichtung für Insassenschutzmittel, wobei zum Auslösen mindestens zwei Schalter aktiviert werden, um mindestens ein Auslösemittel mit einer Spannungsversorgung zu verbinden umfasst die Schritte:
- Aktivieren eines ersten Schalters der Auslösevorrichtung für Insassenschutzmittel;
- Aktivieren eines zweiten Schalters der Auslösevorrichtung für Insassenschutzmittel;
- Erfassen einer Ausgangsspannung an dem zweiten Schalter;
- Deaktivieren des zweiten Schalters abhängig von der Ausgangsspannung.

Vorteilhaft an dem vorgestellten erfindungsgemäßen Verfahren ist es, dass dadurch eine Aktivierung von Insassenschutzmitteln möglich ist, auch im Falle eines Kurzschlusses zur Versorgungsspannung. Denn durch Erfassen einer Ausgangsspannung an dem zweiten Schalter ist es möglich, aus dem Verlauf der erfassten Spannung nach Aktiveren des zweiten Schalters, zu erkennen, dass nun ein Kurzschluss zur Versorgungsspannung vorliegt, der im Falle einer längeren Aktivierung des zweiten Schalters dazu führen kann, dass die Auslösevorrichtung irreparablen Schaden nimmt.

Die erfindungsgemäße Vorrichtung umfasst dabei mindestens einen ersten Schalter, mindestens einen zweiten Schalter, mindestens ein Mittel zum Erfassen einer Ausgangsspannung an dem zweiten Schalter. Die Vorrichtung ist dabei so gestaltet, dass zum Auslösen der Insassenschutzmittel der mindestens eine erste Schalter und der mindestens eine zweite Schalter aktiviert werden müssen. Des Weiteren ist die Vorrichtung derart gestaltet, dass die Vorrichtung den zweiten Schalter abhängig von der Ausgangsspannung an dem zweiten Schalter deaktiviert.

Unter einer Auslösevorrichtung kann vorliegend ein Bauteil verstanden werden, das dazu ausgebildet ist ein Insassenschutzmittel, wie beispielsweise einen oder mehrere Airbags, einen oder mehrere Gurtstraffer, einen oder mehrere verstellbare, sog. aktive, Kopfstützen, einen oder mehrere verstellbare, insbesondere ausfahrbare, Überrollbügel auszulösen bzw. zu aktivieren.

Unter einem Schalter kann vorliegend ein Bauteil, vorzugsweise ein elektronisches Bauteil verstanden werden, das dazu ausgebildet ist einen elektrischen Stromkreis zu öffnen bzw. zu schließen. Ein solcher Schalter kann als diskretes Bauteil oder als Teil eines integrierten Bauteils, eines sog. AISC, vorgesehen sein. Neben der Funktion als Schalter kann es solches Bauteil auch entsprechende Mittel aufweisen, um eine Spannung, insbesondere einen Ausgangsspannung, an dem Bauteil zu erfassen und geeignet auszugeben.

Von einem ersten Schalter bzw. einer High-Side spricht man vorliegend, wenn der Schalter in einem Stromkreis in einer Stromflussrichtung von einer Energiequelle zu einem Massepotential vor der Auslösevorrichtung angebracht ist. Entsprechend spricht man von einem zweitem Schalter bzw. einer Low-Side vorliegend, wenn der Schalter in einem Stromkreis in einer Stromflussrichtung von einer Energiequelle zu einem Massepotential nach der Auslösevorrichtung angebracht ist.

Kurzschlussszenarien, die beim Ausführen eines Verfahrens zum Betreiben von Insassenschutzmitteln bzw. in Vorrichtungen zum Auslösen von Insassenschutzmitteln auftreten können, lassen sich in drei Fälle unterteilen.

Fall A: Der Kurzschluss zur Versorgungsspannung liegt niederohmig am ersten Schalter an. Sobald der zweite Schalter aktiviert wird, bricht die Ausgangsspannung am zweiten Schalter im Verhältnis von Innenwiderstand des durchgeschalteten zweiten Schalters (RDS) zu der (ohmschen) Impedanz der Last, bspw. der pyrotechnischen und/oder reversiblen bzw. elektromagnetischen Zündmittel, zwischen dem ersten und dem zweiten Schalter (RLAST) ein (kleine Werte). Der Strom steigt dabei exponentiell an und wird durch die Last der Auslösemittel der Insassenschutzmittel begrenzt. Nach einer definierten Zeit (z.B. 3 ms) wird der zweite Schalter, gegebenenfalls auch der erste Schalter, deaktiviert. Heutige Auslösevorrichtungen sind für einen solchen Lastfall ausgelegt und nehmen dadurch keinen irreparablen Schaden. Des Weiteren werden durch eine solche Ansteuerung die Insassenschutzmittel erfolgreich ausgelöst.

Fall B: Ein Kurzschluss zur Versorgungsspannung liegt niederohmig an dem zweiten Schalter an. Sobald der zweite Schalter aktiviert wird, ändert sich zwar die Ausgangsspannung an dem zweiten Schalter allerdings bleibt sie auf einem hohen Niveau (oberhalb einer Abschaltschwelle). Würde der zweite Schalter und gegebenenfalls der erste Schalter nicht innerhalb kürzester Zeit (ungefähr 100 µs) wieder abgeschaltet werden, so kann durch den sehr hohen Stromfluss die Auslösevorrichtung einen irreparablen Schaden nehmen. Daher wird nun erfindungsgemäß der zweite Schalter und gegebenenfalls auch der erste Schalter nach Erkennen des Falls B wieder deaktiviert. Die thermische Belastung, die durch den sehr hohen Stromfluss durch die Auslösevorrichtung auftreten könnte, wird dadurch begrenzt. Damit wird die Auslösevorrichtung in vorteilhafter Weise vor irreparablem Schaden bewahrt. Ein Auslösen der Insassenschutzmittel kann in diesem Fall nicht gewährleistet werden. Dennoch wird gewährleistet, dass die Auslösevorrichtung intakt bleibt.

Fall C: Ein Kurzschluss zur Versorgungsspannung liegt hochohmig bzw. instabil an dem zweiten Schalter an. Weil der zweite Schalter aktiviert wird, löst sich der Kurzschluss zur Versorgungsspannung durch den Stromsanstieg auf und die Ausgangsspannung bricht wie im Fall A ein. Ein vorzeitiges Abschalten wie in Fall B ist in diesem Fall nicht notwendig. Die Auslösevorrichtung ist für die nun entstehende Last ausgelegt und nimmt keinen irreparablen Schaden. Eine Auslösung der Insassenschutzmittel kann gewährt werden.

Vorteilhaft an dem erfindungsgemäßen Verfahren ist, dass in Fällen, in denen vorher ein Kurzschluss erkannt wurde, ein Auslösen der Insassenschutzmittel dennoch möglich ist (, insbesondere auch dann, wenn sich dieser beim Schließen des zweiten Schalters auflöst)

Vorteilhaft in dem erfindungsgemäßen Verfahren ist es, dass es auch nach Erkennen eines Kurzschlusses zu Spannungsversorgung ausgeführt wird. Bei Erkennen eines Kurzschlusses gibt es heutzutage zwei Strategien. Entweder wird weiterhin versucht, die Rückhaltemittel auszulösen. Dabei kann es dazu kommen, dass die Auslösevorrichtung durch den hohen Kurzschlussstrom einen irreparablen Schaden nimmt. Oder ein Auslösen der Insassenschutzmittel wird abgebrochen, um die Auslösevorrichtung vor den hohen Stromflüssen zu schützen. Das erfindungsgemäße Verfahren ermöglicht es, in bestimmten Kurzschlussszenarien (bspw. Fall A oder Fall C) ein Auslösen der Insassenschutzmittel zu gewährleisten, wo hingegen in Szenarien (bspw. Fall B), in denen ein Auslösen der Insassenschutzmittel ohnehin nicht erfolgen würde, zudem ein Schutz der Auslösevorrichtung vor irreparablen Schaden gewährleistet wird und zusätzlich wertvolle Energie eingespart wird. Dadurch ist es dann in vorteilhafter Weise möglich einen kleinere und damit platzsparendere und kostengünstigere Energiereserve für die Auslösevorrichtung einzusetzen.

In einer vorteilhaften Ausgestaltung des erfindungsgemäßen Verfahrens, wird das Verfahren nach Erkennen eines Kurzschlusses zu einer Versorgungsspannung ausgeführt. In einer solchen Ausgestaltung des Verfahrens wird vermieden, dass Ressourcen, wie bspw. Energiereserven, in einer erfindungsgemäßen Vorrichtung genutzt werden müssen, obwohl kein Kurzschluss vorliegt. Die vorhandenen Ressourcen werden dadurch optimal genutzt.

Besonders vorteilhaft ist der Einsatz des erfindungsgemäßen Verfahren zum Auslösen von Insassenschutzmitteln, die mindestens ein reversibles bzw. induktives Auslösemittel aufweisen. Im Gegensatz zum nichtreversiblen bzw. pyrotechnischen Zündmitteln werden reversible bzw. induktive Auslösemittel nach der Auslösung nicht hochohmig. Das bedeutet, dass es ist möglich, dass auch nach Auslösen der Insassenschutzmittel Strom durch die Auslösemittel fließen kann. Im Falle eines Kurzschlusses bedeutet dies, dass ein sehr hoher Kurzschlussstrom durch die Auslösemittel fließen kann. Dieser hohe Kurzschlussstrom birgt die Gefahr, dass eine irreparable Beschädigung der Auslösevorrichtung eintreten kann. Durch das erfindungsgemäße Verfahren wird diese Gefahr in vorteilhafte Weise abgewehrt.

Vorliegend kann unter reversiblen Auslösemittel, Mittel verstanden werden, die dazu geeignete sind mehrmals in ihrer Lebenszeit ausgelöst zu werden. Ein Beispiel für ein solches reversibles Auslösemittel ist ein elektromagnetischer Aktuator, der durch ein induktives Element betrieben wird. Ein solcher Aktuator weist typischerweise mindestens zwei Stellungen auf. Eine erste Stellung bzw. Ruhestellung und eine zweite Stellung bzw. Arbeitsstellung. Eine Aktivierung eines solches Aktuators bewegt einen solchen Aktuator von einer Ruhestellung in eine Arbeitsstellung. Typischerweise kann ein solcher Aktuator dann wieder von der Arbeitsstellung in die Ruhestellung zurückbewegt werden. Die vorliegende Erfindung erfasst allerdings alle möglichen Arten von reversiblen Auslösemitteln.

In einer vorteilhaften Ausgestaltung des erfindungsgemäßen Verfahrens wird der zweite Schalter nach einer ersten Zeitspanne deaktiviert, wenn die Ausgangsspannung innerhalb der ersten Zeitspanne oberhalb eines festgelegten Grenzwertes für die Ausgangsspannung bleibt. Bricht die Ausgangsspannung nach Aktivieren des zweiten Schalters nicht ein, so liegt ein Kurzschluss des Falls B vor. Im Falle eines Kurzschlusses nach Fall B würde eine längere Aufrechterhaltung des Zündstroms eine thermische Belastung der Auslösevorrichtung erzeugen, die zu einer Zerstörung der Auslösevorrichtung führen kann. Daher wird der Aktivierungsversuch der Insassenschutzmittel nach einer ersten Zeitspanne abgebrochen. Typischerweise liegt diese erste Zeitspanne in einer Größenordnung von wenigen 100 µs. Gegebenenfalls wird nach dieser ersten Zeitspannung auch der erste Schalter deaktiviert.

In vorteilhafter Weise wird beim erfindungsgemäßen Verfahren der zweite Schalter nach einer zweiten Zeitspanne deaktiviert, wenn die Ausgangsspannung innerhalb der ersten Zeitspanne unterhalb eines festgelegten Grenzwertes für die Ausgangsspannung fällt. Fällt nach Aktivierung des zweiten Schalters die Ausgangsspannung an dem zweiten Schalter unterhalb des festgelegten Grenzewertes, der sogenannten Abschaltschwelle, dann liegt ein Kurzschlussszenario nach Fall A oder nach Fall C vor. In beiden Fällen wird die auftretende Last durch die Auslösemittel begrenzt. Dies führt dazu, dass kein hoher Strom durch die Auslösemittel fließen kann und dadurch keine hohe thermische Belastung der Auslösevorrichtung geschieht. Somit besteht keine Gefahr der Zerstörung der Auslösevorrichtung. Die zweite Zeitspanne ist dabei die Zeitspanne, die im Normalfall notwendig ist, um die Insassenschutzmittel typgerecht auszulösen. Typischerweise liegt diese zweite Zeitspanne im Rahmen von wenigen Millisekunden, beispielsweise 3 ms. Gegebenenfalls wird nach dieser zweiten Zeitspannung auch der erste Schalter deaktiviert.

In vorteilhafter Weise ist bei dem erfindungsgemäßen Verfahren die erste Zeitspanne kürzer als die zweite Zeitspanne. Insbesondere ist die erste Zeitspanne um mindestens einer Zehnerpotenz kürzer als die zweite Zeitspanne. Dadurch dass die erste Zeitspanne wesentlich kürzer ist als die zweite Zeitspanne und dass innerhalb der ersten Zeitspanne feststeht, ob ein Abbruch des Auslöseversuchs vorteilhaft ist oder nicht, sorgt das erfindungsgemäße Verfahren in vorteilhafter Weise dafür, das die Auslösevorrichtung vor thermischer Überbelastung geschützt wird.

Die erfindungsgemässe Vorrichtung weist Mittel zum Erkennen eines Kurzschlusses zu einer Versorgungsspannung auf. Unter Mittel zum Erkennen eines Kurzschlusses kann vorliegend ein Bauteil verstanden werden, das durch Erfassen von geeigneten physikalischen Größen, beispielsweise Spannungshöhen, Stromstärken, Spannungsverläufen, an weiteren Bauteilen der Vorrichtung das Vorliegen eines Kurzschlusses erkennen und dann ein geeignetes Signal ausgeben.

In einer vorteilhaften Ausgestaltung der erfindungsgemäßen Vorrichtung arbeiten die Mittel zu Erkennung eines Kurzschlusses zyklisch. Durch das zyklische Arbeiten wird vorteilhaft erreicht, dass ein Kurzschluss bereits frühzeitig erkannt wird und nicht erst, wenn es zu einer Aktivierung der Auslösemittel kommen soll.

In einer vorteilhaften Ausgestaltung der erfindungsgemäßen Vorrichtung weist die Vorrichtung Mittel zum Erfassen von Zeitspannen auf, insbesondere, dass das Mittel zum Erfassen von Zeitspannen derart ausgestaltet sind, dass das Mittel Zeitspannen erfasst, die mindestens um eine Zehnerpotenz verschieden sind. Durch den Einsatz solcher Mittel wird in vorteilhafterweise erreicht, dass die Vorrichtung in der Lage ist, nach kürzeste möglicher Zeit im Falle eines Kurzschlusses den zweiten Schalter zu deaktivieren. Im Falle eines Kurzschlusses nach Fall B ist es unbedingt notwendig, so schnell wie möglich einen weiteren Stromfluss durch die Auslösemittel zu verhindern, damit dadurch eine zu hohe thermische Belastung und mögliche Zerstörung der Auslösemittel verhindert wird.

Ausführungsbeispiele der Erfindung werden in den nun folgenden Zeichnungen dargestellt und in der nachfolgenden Beschreibung näher erläutert. In den Zeichnungen bezeichnen gleiche Bezugszeichen Elemente, die gleiche oder ähnliche Funktionen erfüllen.

### Zeichnungen

Es zeigen
- Fig. 1 ein Schaltbild einer Auslösevorrichtung
- Fig. 2 ein Spannungs-Zeit-Diagramm
- Fig . 3 ein weiteres Spannungs-Zeit-Diagramm
- Fig. 4 ein Ablaufdiagramm

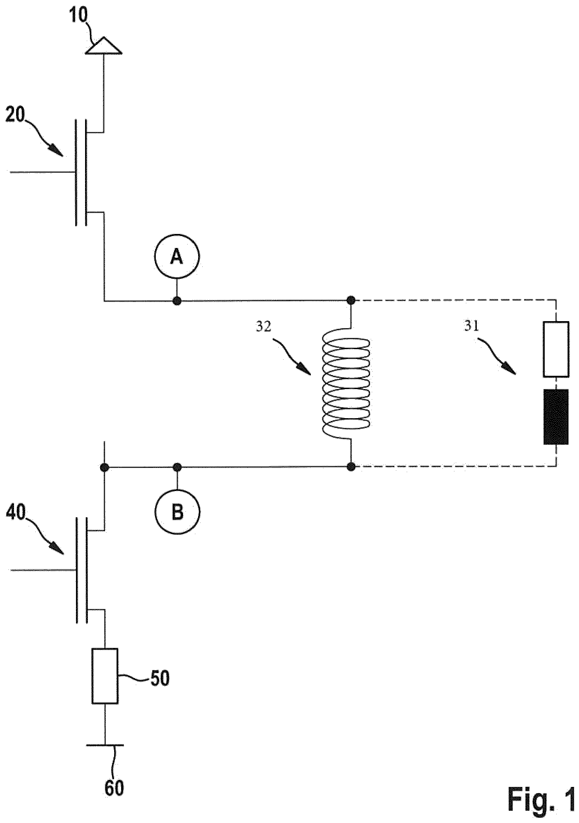

Fig. 1 zeigt ein Schaltbild einer Auslösevorrichtung nach eine Ausführungsform der Erfindung. Mit dem Bezugszeichen 10 ist ein Versorgungsspannung bezeichnet, mit dem Bezugszeichen 20 ist ein erster Schalter bzw. eine High-Side bezeichnet mit dem Bezugszeichen 31 ist eine pyrotechnische Auslösemittel bezeichnet, mit dem Bezugszeichen 32 ist ein induktives Auslösemittel bezeichnet, mit dem Bezugszeichen 40 ist ein zweiter Schalter bzw. eine Low-Side bezeichnet, mit dem Bezugszeichen 50 ist ein (Ersatz-)Widerstand RDSon bezeichnet, mit dem Bezugszeichen 60 ist ein Massepotential bezeichnet.

Die Punkte A und B zeigen Stellen an, an denen ein Kurzschluss zu einer Vorsorgungsspannung 10 auftreten kann. Wenn ein Kurzschluss an Punkt A auftritt so spricht man von einem Kurzschluss an der High-Side 20. Liegt der Kurzschluss niederohmig vor, so handelt es sich um einen Kurzschluss des Falls A. Wenn ein Kurzschluss an Punkt B auftritt, so spricht man von einem Kurzschluss an der Low-Side 40. Liegt der Kurzschluss niederohmig vor, so handelt es sich um einen Kurzschluss des Falls B. Liegt er dagegen hochohmig bzw. instabil vor, so handelt es sich um einen Kurzschluss des Falls C.

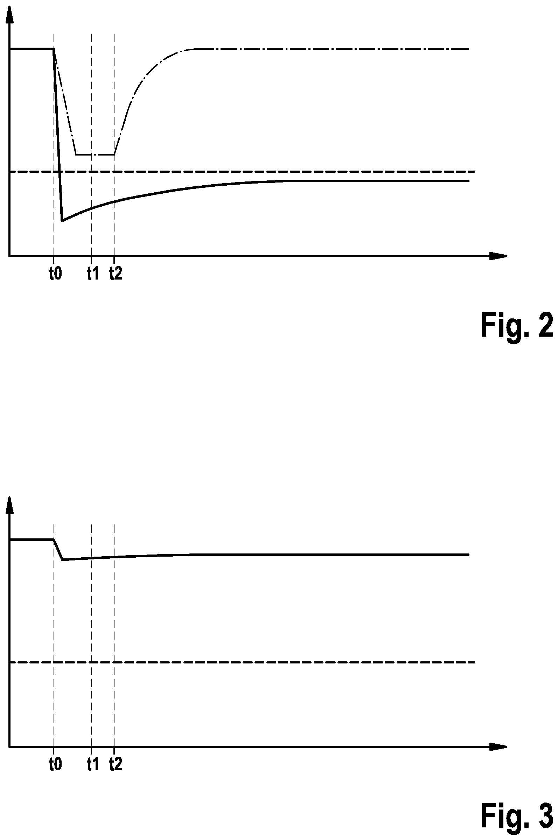

Fig. 2 zeigt ein Spannungs-Zeit-Diagramm für Kurzschlussszenarien an Punkt A für pyrotechnische Auslösemittel 31 bzw. induktive Auslösemittel 32. Die Strich-Punkt-Linie stellt den Spannungsverlauf eines pyrotechnischen Auslösemittels 31 am Punkt A dar. Die durchgezogenen Kurve stellt den Spannungsverlauf eines induktiven Auslösemittels 32 am Punkt A dar. Die waagerechte gestrichelte Linie stellt eine Abschaltschwelle 210 dar.

Zum Zeitpunkt t0 wird der zweite Schalter geschlossen. Nach einer ersten Zeitdauer t1 zum Zeitpunkt t1 muss entschieden werden, ob der zweite Schalter wieder geöffnet wird oder ob der zweite Schalter geschlossen bleiben kann. Zum Zeitpunkt t2 ist zumindest bei induktiven Auslösemittel eine Auslösung erfolgt.

In dem Diagramm ist deutlich zu erkennen, dass bei pyrotechnische Auslösemittel 31 der Spannungsverlauf kurz einbricht und nachdem die Zündmittel ausgelöst wurden, nach dem Zeitpunkt t2 der Spannungsverlauf wieder auf Kurzschlussspannungsniveau ansteigt. Da pyrotechnische Zündmittel nach dem Auslösen ohnehin zerstört sind, ist die Kurzschlussspannung irrelevant, da kein Kurzschlussstrom fließen kann. Eine zu hohe thermische Belastung ist ausgeschlossen und die Auslösemittel bleiben intakt.

In dem Diagramm ist deutlich zu erkennen, wie in den Fällen A und B bei induktiven Auslösemittel 32 die hohe Kurzschlussspannung einbricht und der Spannungsverlauf durch die Last in den induktiven Auslösemitteln 32 and der Abschaltschwelle 210 begrenzt wird. Eine zu hohe thermische Belastung ist damit ausgeschlossen und die Auslösemittel bleiben intakt.

Fig. 3 zeigt ein weiteres Spannungs-Zeit-Diagramm an Punkt B für induktive Auslösemittel 32. Die durchgezogene Linie stellt den Spannungsverlauf für induktive Auslösemittel 32 dar. Die waagerechte gestrichelte Linie stellt eine Abschaltschwelle 210 dar.

In dem Diagramm ist deutlich zu erkennen, dass zum Zeitpunkt t0 ein leichter Spannungseinbruch stattfindet. Der Spannungseinbruch bleibt aber über die Zeitpunkte t1 und t2 auf einem hohen Niveau. Eine so hohe Spannung führt bei konstantem Widerstand, wie es im Falle eines induktiven Auslösemittels 32 der Fall ist, zu einem hohen Strom. Dieser hohe Strom kann zu einer hohen thermischen Belastung der Auslösemittel führen. Durch Deaktivieren des zweiten Schalters in einem solchen Fall, möglichst schon vor dem Zeitpunkt t1, kann eine zu hohe thermische Belastung damit Zerstörung der Auslösemittel verhindert werden.

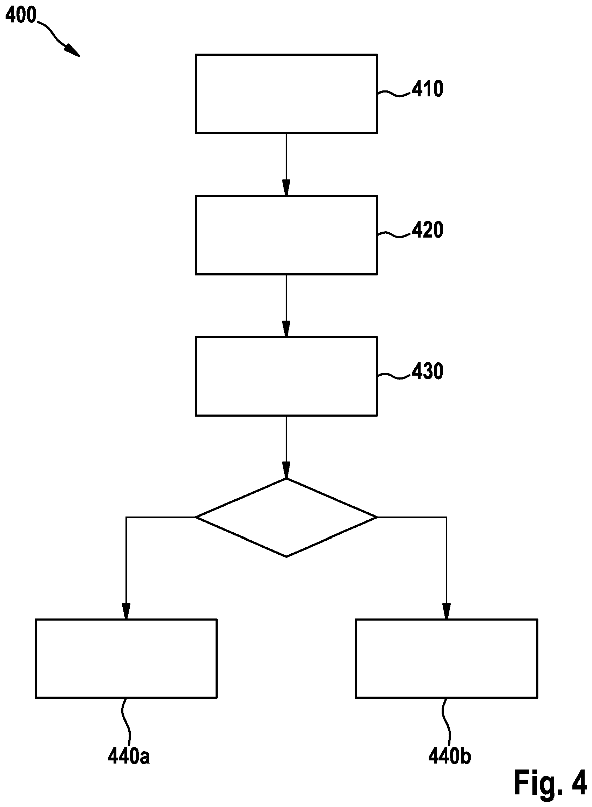

Fig. 4 zeigt ein Ablaufdiagramm des erfindungsgemäßen Verfahrens. In Schritt 410 erfolgt eine Aktivierung eines ersten Schalters bzw. einer High-Side 20. In Schritt 420 erfolgt eine Aktivierung eines zweiten Schalters bzw. einer Low-Side 40. In Schritt 430 erfolgt eine Erfassung einer Ausgangsspannung (U_{B}) an dem zweiten Schalter 40. Danach erfolgt abhängig von der erfassten Ausgangsspannung in Schritt 430 entweder Schritt 440a, eine Deaktivierung des zweiten Schalters 40 nach einer ersten Zeitdauer t₁ oder Schritt 440b, eine Deaktivierung des zweiten Schalters 40 nach einer zweiten Zeitdauer t₂.

## Patentansprüche

1. Verfahren (400) zum Betreiben einer Auslösevorrichtung für Insassenschutzmittel mit folgenden Schritten, wobei zum Auslösen mindestens zwei Schalter (20, 40) aktiviert werden, um mindestens ein Auslösemittel (31, 32) mit einer Spannungsversorgung (U_{Bat}) zu verbinden:
• Aktivieren (410) eines ersten Schalters (20) der Auslösevorrichtung (31, 32) für Insassenschutzmittel;
• Aktivieren (420) eines zweiten Schalters (40) der Auslösevorrichtung (31, 32) für Insassenschutzmittel;
• Erfassen (430) einer Ausgangsspannung (U_{B}) an dem zweiten Schalter (40);
• Deaktivieren (440a, 440b) des zweiten Schalters (40) abhängig von der Ausgangsspannung (U_{B}) an dem zweiten Schalter (40)
**dadurch gekennzeichnet, dass**
das Verfahren nach Erkennen eines Kurzschlusses zu der Spannungsversorgung (U_{Bat}) ausgeführt wird.

2. Verfahren nach Anspruch 1
**dadurch gekennzeichnet, dass**
mindestens ein insassenschutzmittel ein induktives Auslösemittel (32) aufweist.

3. Verfahren (400) nach einem der vorhergehenden Ansprüche,
**dadurch gekennzeichnet, dass**
der zweite Schalter (20) nach einer ersten Zeitspanne (t₁) deaktiviert wird, wenn die Ausgangsspannung (U_{B}) innerhalb der ersten Zeitspanne (t₁) oberhalb eines festgelegten Grenzwertes (210,) für die Ausgangsspannung (U_{B}) bleibt.

4. Verfahren (400) nach einem der vorhergehenden Ansprüche,
**dadurch gekennzeichnet, dass**
der zweite Schalter (40) nach einer zweiten Zeitspanne (t₂) deaktiviert wird, wenn die Ausgangsspannung (U_{B}) innerhalb der ersten Zeitspanne (t₁) unterhalb eines festgelegten Grenzwertes für die Ausgangsspannung (U_{B}) fällt.

5. Verfahren (400) nach Anspruch 3 und 4,
**dadurch gekennzeichnet, dass**
die erste Zeitspanne (t₁) kürzer ist als die zweite Zeitspanne (t₂), insbesondere dass die erste Zeitspanne (t₁) um mindestens eine Zehnerpotenz kürzer ist als die zweite Zeitspanne (t₂).

6. Vorrichtung (1) zum Auslösen von Insassenschutzmitteln mit
mindestens einem Mittel zum Erkennen eines Kurzschlusses zu einer Versorgungsspannung (U_{Bat}) und
mindestens einem ersten Schalter (20) und
mindestens einem zweiten Schalter (40) und
mindestens einem Mittel zum Erfassen einer Ausgangsspannung (U_{B}) an dem zweiten Schalter (40), wobei
der mindestens eine erste Schalter (20) und der mindestens eine zweite Schalter (40) zum Auslösen von Insassenschutzmittel vorgesehen sind, wobei die Vorrichtung derart gestaltet ist, dass die Vorrichtung den zweiten Schalter(40) nach Erkennen eines Kurzschlusses zu der Spannungsversorgung (U_{Bat}) abhängig von einer Ausgangsspannung (U_{B}) an dem zweiten Schalter (40) deaktiviert.

7. Vorrichtung (1) nach Anspruch 6,
**dadurch gekennzeichnet, dass**
die Vorrichtung zum Auslösen mindestens eines Insassenschutzmittels vorgesehen ist, wobei das Insassenschutzmittel mindestens ein induktives Auslösemittel (32) aufweist.

8. Vorrichtung (1) nach Anspruch 6 oder 7,
**dadurch gekennzeichnet, dass**
das mindestens eine Mittel zum Erkennen eines Kurzschlusses zyklisch arbeitet.

9. Vorrichtung (1) nach Anspruch 6 bis 8,
**dadurch gekennzeichnet, dass**
die Vorrichtung mindestens ein Mittel zum Erfassen von Zeitspannen aufweist, insbesondere, dass das Mittel zum Erfassen von Zeitspannen derart ausgestaltet sind, dass das Mittel Zeitspannen erfasst, die mindestens um eine Zehnerpotenz verschieden sind.

10. Steuergerät, das eine Vorrichtung (1) nach einem der Ansprüche 6 bis 9 aufweist und das derart konfiguriert ist, dass das Steuergerät ein Verfahren (400) nach den Ansprüchen 1 bis 5 ausführt.

## Claims

1. Method (400) for operating a trigger apparatus for occupant protection means, having the following steps, wherein triggering is achieved by virtue of at least two switches (20, 40) being activated in order to connect at least one trigger means (31, 32) to a power supply (U_{Bat}):
• activating (410) a first switch (20) of the trigger apparatus (31, 32) for occupant protection means;
• activating (420) a second switch (40) of the trigger apparatus (31, 32) for occupant protection means;
• recording (430) an output voltage (U_{B}) on the second switch (40);
• deactivating (440a, 440b) the second switch (40) on the basis of the output voltage (U_{B}) on the second switch (40),
**characterized in that**
the method is carried out following detection of a short to the power supply (U_{Bat}).

2. Method according to Claim 1,
**characterized in that**
at least one occupant protection means has an inductive trigger means (32).

3. Method (400) according to either of the preceding claims,
**characterized in that**
the second switch (20) is deactivated after a first period (t₁) if the output voltage (U_{B}) remains above a stipulated limit value (210) for the output voltage (U_{B}) within the first period (t₁).

4. Method (400) according to one of the preceding claims,
**characterized in that**
the second switch (40) is deactivated after a second period (t₂) if the output voltage (U_{B}) drops below a stipulated value for the output voltage (U_{B}) within the first period (t₁).

5. Method (400) according to Claims 3 and 4,
**characterized in that**
the first period (t₁) is shorter than the second period (t₂), in particular **in that** the first period (t₁) is shorter than the second period (t₂) by at least a power of ten.

6. Apparatus (1) for triggering occupant protection means, having
at least one means for detecting a short to a supply voltage (U_{Bat}) and
at least one first switch (20) and
at least one second switch (40) and
at least one means for recording an output voltage (U_{B}) on the second switch (40), wherein
the at least one first switch (20) and the at least one second switch (40) are intended for triggering occupant protection means,
wherein the apparatus is designed such that the apparatus deactivates the second switch (40) following detection of a short to the power supply (U_{Bat}) on the basis of an output voltage (U_{B}) on the second switch (40).

7. Apparatus (1) according to Claim 6,
**characterized in that**
the apparatus is intended for triggering at least one occupant protection means, wherein the occupant protection means has at least one inductive trigger means (32).

8. Apparatus (1) according to Claim 6 or 7,
**characterized in that**
the at least one means for detecting a short operates cyclically.

9. Apparatus (1) according to Claims 6 to 8,
**characterized in that**
the apparatus has at least one means for recording periods, in particular **in that** the means for recording periods is configured such that the means records periods that are different at least by a power of ten.

10. Control device that has an apparatus (1) according to one of Claims 6 to 9 and that is configured such that the control device carries out a method (400) according to Claims 1 to 5.

## Revendications

1. Procédé (400) de fonctionnement d'un dispositif de déclenchement de moyens de protection d'occupant de véhicule, le procédé comprenant les étapes suivantes, au moins deux commutateurs (20, 40) étant activés pour effectuer le déclenchement pour relier au moins un moyen de déclenchement (31, 32) à une alimentation en tension (U_{Bat}) :
• activer (410) un premier commutateur (20) du dispositif (31, 32) de déclenchement de moyens de protection d'un occupant de véhicule ;
• activer (420) un deuxième commutateur (40) du dispositif (31, 32) de déclenchement de moyens de protection d'un occupant de véhicule ;
• détecter (430) une tension de sortie (U_{B}) au niveau du deuxième commutateur (40) ;
• désactiver (440a, 440b) le deuxième commutateur (40) en fonction de la tension de sortie (U_{B}) au niveau du deuxième commutateur (40),
**caractérisé en ce que**
le procédé est mise en oeuvre après la détection d'un court-circuit dans l'alimentation en tension (U_{Bat}).

2. Procédé selon la revendication 1,
**caractérisé en ce que**
au moins un moyen de protection d'occupant de véhicule comporte un moyen de déclenchement inductif (32).

3. Procédé (400) selon l'une des revendications précédentes,
**caractérisé en ce que**
le deuxième commutateur (20) est désactivé après un premier intervalle de temps (t₁) lorsque la tension de sortie (U_{B}) reste supérieure à une valeur limite définie (210) de la tension de sortie (U_{B}) pendant le premier intervalle de temps (t₁).

4. Procédé (400) selon l'une des revendications précédentes,
**caractérisé en ce que**
le deuxième commutateur (40) est désactivé après un deuxième intervalle de temps (t₂) lorsque la tension de sortie (U_{B}) tombe au-dessous d'une valeur limite définie de la tension de sortie (U_{B}) pendant le premier intervalle de temps (t₁).

5. Procédé (400) selon les revendications 3 et 4,
**caractérisé en ce que**
le premier intervalle de temps (t₁) est inférieur au deuxième intervalle de temps (t₂), notamment **en ce que** le premier intervalle de temps (t₁) est inférieur, d'au moins une puissance de dix, au deuxième intervalle de temps (t₂).

6. Dispositif (1) de déclenchement de moyens de protection d'occupant de véhicule, le dispositif comprenant
au moins un moyen de détection d'un court-circuit dans une tension d'alimentation (U_{Bat}) et
au moins un premier commutateur (20) et
au moins un deuxième commutateur (40) et
au moins un moyen de détection d'une tension de sortie (U_{B}) au niveau du deuxième commutateur (40),
l'au moins un premier commutateur (20) et l'au moins un deuxième commutateur (40) étant prévus pour déclencher des moyens de protection d'occupant de véhicule, le dispositif étant conçu pour désactiver le deuxième commutateur (40) après la détection d'un court-circuit dans l'alimentation (U_{Bat}) en fonction d'une tension de sortie (U_{B}) au niveau du deuxième commutateur (40).

7. Dispositif (1) selon la revendication 6,
**caractérisé en ce que**
le dispositif est prévu pour déclencher au moins un moyen de protection d'occupant de véhicule, le moyen de protection d'occupant de véhicule comportant au moins un moyen de déclenchement inductif (32).

8. Dispositif (1) selon la revendication 6 ou 7,
**caractérisé en ce que**
l'au moins un moyen de détection un court-circuit fonctionne de manière cyclique.

9. Dispositif (1) selon les revendications 6 à 8,
**caractérisé en ce que**
le dispositif comporte au moins un moyen de détection d'intervalles de temps, en particulier **en ce que** le moyen de détection d'intervalles de temps est conçu pour détecter des intervalles de temps qui diffèrent d'au moins une puissance de dix.

10. Appareil de commande comprenant un dispositif (1) selon l'une des revendications 6 à 9 et configuré pour mettre en oeuvre un procédé (400) selon les revendications 1 à 5.
